# EUROPÄISCHE PATENTANMELDUNG

(11) **EP 3 816 413 A1**
(43) Veröffentlichungstag der Anmeldung: **05.05.2021**
(21) Anmeldenummer: 19206843.5
(22) Anmeldetag: 04.11.2019
(51) Int. Cl.: F01K 25/00, F01K 13/00, F01K 13/02, F02C 1/10

(54) **DRUCKREGELUNG FÜR GESCHLOSSENE JOULE-KREISPROZESSE**

(71) Anmelder: Siemens Aktiengesellschaft, 80333 München (DE)
(72) Erfinder: Graeber, Carsten, 91056 Erlangen (DE); Juretzek, Uwe, 91058 Erlangen (DE)

(57) **Zusammenfassung**

Die Erfindung betrifft eine Vorrichtung (1) umfassend ein geschlossenes Gassystem (2) mit einem Arbeitskreislauf (3), in dem ein Verdichter (4) für ein Arbeitsfluid, ein erster Wärmeübertrager (5) zur Erwärmung des Arbeitsfluids, ein Expander (6) und ein zweiter Wärmeübertrager (7) zur Abkühlung des Arbeitsfluids angeordnet sind, mit einem ersten Gasdruckbehälter (8) und einer ersten Gasleitung (9), die zwischen dem Verdichter (4) und dem ersten Wärmeübertrager (5) vom Arbeitskreislauf (3) abzweigt und in den ersten Gasdruckbehälter (8) mündet, sowie mit einer zweiten Gasleitung (10), die vom ersten Gasdruckbehälter (8) abzweigt und zwischen dem Expander (6) und dem zweiten Wärmeübertrager (7) in den Arbeitskreislauf (3) mündet. Die Erfindung betrifft ferner ein Verfahren zur Druckregelung in einem geschlossenen Gassystem (2).

## Beschreibung

Die Erfindung betrifft eine Vorrichtung umfassend ein geschlossenes Gassystem mit einem Arbeitskreislauf, sowie ein Verfahren zur Druckregelung in einem geschlossenen Gassystem.

Geschlossene Gassysteme unterliegen wegen des vorgegebenen Systemvolumens temperatur- und/oder massenstrominduzierten Druckschwankungen, letztere treten durch gezielte Gaszufuhr bzw. -abfuhr sowie durch nicht vermeidbare Gasverluste durch Systemleckagen auf. Bei geschlossenen Joule-Kreisprozessen (engl.: Brayton cycles) haben diese Druckschwankungen bzw. der jeweils eingestellte obere/untere Systemdruck konkrete Auswirkungen auf die Leistungsfähigkeit des Prozesses.

Aufgabe der Erfindung ist es, eine Vorrichtung bereitzustellen, die für einen geschlossenen Joule-Kreisprozess einen verbesserten Teillastwirkungsgrad ermöglicht. Eine weitere Aufgabe der Erfindung ist es, ein entsprechendes Verfahren zur Druckregelung in einem solchen geschlossenen Gassystem anzugeben.

Geschlossene Joule-Kreisprozesse stellen besondere Anforderungen an die Systemauslegung, da ein definierter unterer Prozessdruck z.B. durch die Umgebung oder durch einen Kondensationsprozess fehlt. Dieser untere Prozessdruck muss deshalb über eine entsprechende Systemdruckregelmöglichkeit eingestellt werden. Dabei gilt es die Druckänderungen durch Änderungen der Prozessarbeitstemperaturen auszugleichen.

Der untere Prozessdruck sollte in Abhängigkeit der Kreisprozessleistung gleitend gefahren werden, so wie dies auf der oberen Prozessdruckseite als Standard angesehen werden kann (Gleitdruckfahrweise bei Dampf- und Gasturbinen zur Vermeidung von Drosselverlusten in Teillast). Darüber hinaus bestehen in der Regel wirtschaftlich oder aus Umweltschutzsicht begründete Anforderungen, die Gasabgabe aus dem System in die Umgebung soweit möglich ganz zu vermeiden oder zumindest möglichst gering zu halten, da das Kreislaufmedium zu wertvoll (z.B. bei Verwendung von reinem Stickstoff oder gar Helium) oder ggf. zu umweltschädlich ist, als dass man mehr als nur minimale Verluste in die Umgebung akzeptieren kann.

Ausgehend von diesen Überlegungen löst die Erfindung die auf eine Vorrichtung gerichtete Aufgabe, indem sie vorsieht, dass bei einer derartigen Vorrichtung, umfassend ein geschlossenes Gassystem mit einem Arbeitskreislauf, in dem ein Verdichter für ein Arbeitsfluid, ein erster Wärmeübertrager zur Erwärmung des Arbeitsfluids, ein Expander (Gasexpansionsturbine) und ein zweiter Wärmeübertrager zur Abkühlung des Arbeitsfluids angeordnet sind, ein erster Gasdruckbehälter und eine erste Gasleitung vorgesehen sind, wobei die Gasleitung zwischen dem Verdichter und dem ersten Wärmeübertrager vom Arbeitskreislauf abzweigt und in den ersten Gasdruckbehälter mündet, sowie ferner eine zweite Gasleitung vorgesehen ist, die vom ersten Gasdruckbehälter abzweigt und zwischen dem Expander und dem zweiten Wärmeübertrager in den Arbeitskreislauf mündet.

Die Erfindung sieht also einen Gasdruckbehälter vor (oder falls wirtschaftlicher ggf. auch mehrere), der auf der Hochdruckseite (d.h. hinter dem Verdichter des geschlossenen Joule-Kreisprozesses am Arbeitsprozess mit einer eigenen Gasleitung zum Befüllen des Behälters angeschlossen wird. Der Behälter wird immer dann befüllt, wenn es aus Sicht des Prozesses erforderlich ist (z.B. wird während des Abfahrens der Systemdruck verringert, um Stillstandsverluste zu senken). Dazu wird ein Teilstrom aus dem Joule-Kreisprozess ausgeleitet. Um die eingespeicherte Gasmenge im Bedarfsfall in das System abzugeben, wird eine weitere Gasleitung nach dem Expander in den Arbeitskreislauf eingebunden.

In einem vorteilhaften Ausführungsbeispiel der Erfindung zweigt eine dritte Gasleitung vom Gasdruckbehälter oder von der zweiten Gasleitung ab und mündet zwischen Verdichter und erstem Wärmeübertrager in den Arbeitskreislauf. Diese weitere Einbindung, jetzt aber auf der Hochdruckseite und vor der Erwärmung des Kreislaufmediums ermöglicht die Nutzung der eingespeicherten Druckenergie während des Anfahrvorganges.

Es ist vorteilhaft, wenn ein dritter Wärmeübertrager in der ersten Gasleitung angeordnet ist. Mit diesem beispielsweise über Umgebungskälte rückgekühlten Wärmeübertrager (die übertragene Wärme könnte auch eingespeichert werden) wird das Gas nach der Verdichtung gekühlt, bevor es vorteilhafter Weise über ein entsprechendes erstes Ventil in der ersten Gasleitung, welches somit in Strömungsrichtung des Arbeitsfluids nach dem dritten Wärmeübertrager angeordnet ist, in den Gasdruckbehälter entspannt wird. Aus dieser Entspannung resultiert je nach eingesetztem Gas eine weitere Abkühlung wegen des Joule-Thomson-Effektes.

Falls wegen des Joule-Thomson-Koeffizienten (der die Stärke und Richtung der Temperaturänderung beschreibt) des jeweiligen Gases eine Erwärmung auf Grund der Entspannung erfolgt, ist zweckmäßigerweise ein erstes Ventil in der ersten Gasleitung in Strömungsrichtung des Arbeitsfluids vor dem dritten Wärmeübertrager angeordnet. Diese Maßnahmen dienen zur Erhöhung der Gasdichte, um somit die eingespeicherte Gasmenge bei gegebenem Behältervolumen zu erhöhen.

In einem vorteilhaften Ausführungsbeispiel der Erfindung ist ein vierter Wärmeübertrager in der zweiten Gasleitung und ein fünfter Wärmeübertrager in der dritten Gasleitung angeordnet. Die zweite und die dritte Gasleitung sind Rückspeiseleitungen vom ersten Gasdruckbehälter in den Arbeitskreislauf. Der vierte und der fünfte Wärmeübertrager werden typischerweise mittels Abwärme (z.B. aus dem Zwischenkühlsystem des Kraftwerkes) beheizt und wärmen das Gas vor Eintritt in den Arbeitskreislauf, d.h. den Arbeitskreislauf auf. Die Gaserwärmung reduziert den Kühleffekt auf das bereits im Arbeitskreislauf befindliche Gas und die über die Gasnachspeisung gewünschte Druckerhöhung im Arbeitskreislauf erfolgt schneller und mit weniger Massenstrom.

In einem weiteren vorteilhaften Ausführungsbeispiel der Erfindung ist mindestens ein thermischer Speicher über umschaltbare Verbindungsleitungen mit dem dritten, vierten oder fünften Wärmeübertrager verbunden. Gerade bei Kraftwerksanlagen, die oft die Leistungsabgabe stark ändern müssen, kann es vorteilhaft sein, einen solchen thermischen Speicher vorzusehen, welcher die Wärme des Arbeitsgases vor Eintritt in den Druckbehälter aufnimmt und dann später vor Rückspeisung des Arbeitsgases in den Kreislauf dieses wieder aufwärmt. Dies kann durch einen als Regenerator betriebenen, mit einem gut wärmespeichernden Feststoff befüllten Behälter erreicht werden. Durch entsprechende Umschaltung von Verbindungsleitungen, wird dieser Behälter von dem wärmeabgebenden bzw. aufnehmenden Gas jeweils in umgekehrter Richtung durchströmt.

Da Leckageverluste nicht ausbleiben ist es sinnvoll, wenn Arbeitsfluid nachspeisbar ist. Zweckmäßigerweise erfolgt dies auf der Niederdruckseite des Arbeitskreislaufes und vor der Kühlung, also zwischen Expander und zweitem Wärmeübertrager.

Es ist vorteilhaft, wenn dem ersten Gasdruckbehälter mindestens ein zweiter Gasdruckbehälter parallelgeschaltet ist und die Gasdruckbehälter auf unterschiedlichen Druckniveaus betreibbar sind. Die Nutzung mehrerer Gasdruckbehälter, welche das Arbeitsgas auf jeweils unterschiedlichen Druckniveaus speichern, ermöglicht es, bei hohem Expanderaustrittsdruck und demzufolge hohem Verdichteraustrittsdruck im Arbeitskreislauf einen vergleichsweise kleinen Druckbehälter "HP" mit hohem Druck zu befüllen. Durch die Entnahme dieses Arbeitsgases aus dem Arbeitskreislauf sinkt daraufhin der Druck im selbigen. Das im weiteren Verlauf entnommene Arbeitsgas wird dann im Druckbehälter "LP" auf einem niedrigeren Druckniveau eingespeichert. Dies ermöglicht es, die Gesamtbehältergröße zu optimieren und insbesondere beim Abfahren den Arbeitskreislaufdruck auf einen möglichst geringen Überdruck abzusenken. Dieser möglichst geringe Arbeitskreislaufüberdruck ist erstrebenswert, um Stillstandsverluste durch Leckage über die Wellendichtungen von Verdichter bzw. Expander gering zu halten.

Um eine möglichst hohe Druckerhöhung bzw. Verdichtung des Arbeitsfluids zu erreichen, können mehrere Verdichterstufen hintereinandergeschaltet werden. In diesem Zusammenhang ist es vorteilhaft, wenn der Verdichter mindestens zwei Verdichterstufen umfasst und eine fünfte Gasleitung zwischen zwei Verdichterstufen vom Arbeitskreislauf abzweigt und in zumindest einen der Gasdruckbehälter mündet. Auf diese Weise die Verdichterleistungsaufnahme bzw. Größe/Ausführung des/der Gasdruckbehälter(s) optimieren.

Die auf ein Verfahren gerichtete Aufgabe wird gelöst durch ein Verfahren zur Druckregelung in einem geschlossenen Gassystem, wobei ein Arbeitsfluid wiederholt nacheinander in einem Arbeitskreislauf verdichtet, erwärmt, entspannt und abgekühlt wird. Gemäß der Erfindung wird zur Regelung eines Drucks im Gassystem ein Teilstrom des Arbeitsfluids aus dem Arbeitskreislauf entnommen und gespeichert, oder eine gespeicherte Arbeitsfluidmenge wieder in den Arbeitskreislauf eingebunden.

Die Vorteile dieses Verfahrens entsprechen den oben erwähnten Vorteilen gemäß der erfindungsgemäßen Vorrichtung.

Vorteilhafter Weise wird das Arbeitsfluid aus dem geschlossenen Gassystem entnommen, nachdem es zumindest teilweise verdichtet wurde und bevor es durch Wärmetausch erwärmt wird.

Weiterhin vorteilhaft ist es, wenn das entnommene Arbeitsfluid gekühlt wird, bevor es eingespeichert wird.

Dabei ist es zweckmäßig, wenn das Arbeitsfluid bei positivem Joule-Thomson-Koeffizienten zuerst über einen Wärmetausch gekühlt und dann mittels eines Ventils in einen Gasdruckbehälter entspannt wird und bei negativem Joule-Thomson-Koeffizienten zuerst über das Ventil entspannt und dann ggf. über einen Wärmetausch gekühlt und danach eingespeichert wird.

Es ist ferner zweckmäßig, wenn das Arbeitsfluid, bevor es in den Arbeitskreislauf wieder eingebunden wird, erwärmt wird.

Vorteilhafter Weise wird ein thermischer Speicher beim Abkühlen des Arbeitsfluids geladen und beim Erwärmen des Arbeitsfluids entladen.

Schließlich ist es vorteilhaft, wenn bei unterschiedlichen Drücken aus dem Arbeitskreislauf entnommenes Arbeitsfluid verschiedenen Gasdruckbehältern zugeführt wird.

Das erfindungsgemäße Konzept einer Gasdruckhalte- und Gasdruckregelung für geschlossene Kreisläufe kann vorteilhaft in verschiedensten geschlossenen Joule-Kreislauf-basierten Kraftwerksprozessen eingesetzt werden, z.B. auch im Rahmen eines LNG-Wiedervergasungskraftwerkes (LNG: kurz für "liquified natural gas"). Damit verbunden ist u.a., dass der Verlust an wertvollem Kreislaufgas (im Falle des LNG-Wiedervergasungskraftwerkes: wasser- und CO₂-freier Stickstoff) minimiert wird und gleichzeitig Drosselverluste im Arbeitskreislauf in Teillast, etc. vermieden werden. Das Kreislaufgas wird dabei bei vergleichsweise niedriger / moderater Temperatur (d.h. viel Masse bei gegebenem Volumen - entweder weil das Kreislaufgas bereits mit vergleichsweise niedriger Temperatur wie beim LNG-Wiedervergasungskraftwerk aus dem Verdichter austritt und/oder weil es zusätzlich vor Eintritt in den Druckbehälter gekühlt wurde) in einem begrenzten Behältervolumen eingespeichert. Aufgrund der moderaten Temperaturen kann außerdem vergleichsweise günstiges Material für das System eingesetzt werden.

Mit dem vorgeschlagenen Konzept wird im ersten Schritt die Druckhaltung im System sichergestellt. Des Weiteren kann durch die Anbindung auf der Hochdruckseite des bereits im Joule-Kreisprozess vorhandenen Verdichters (d.h. dieser Verdichter muss nicht zusätzlich bereitgestellt werden) eine kostengünstige Lösung bereitgestellt werden. Im Hinblick auf die Kosten profitiert auch die Behälterkonfiguration vom hohen Druck. Hoher Druck bedeutet bei einer definierten Ausgleichsmenge ein entsprechend reduziertes Volumen und damit verbunden eine reduzierte Behältergröße. Durch Wahl eines Druckes entsprechend einer Zwischenentnahme aus dem Verdichter kann darüber hinaus immer der aus wirtschaftlicher Sicht günstigste Druck gewählt werden (für den Fall, dass die mit dem Druck zunehmende Behälterwandstärke bzw. das zu wählende Material die Kostensenkung durch Behältervolumenreduktion überkompensiert.) Außerdem ermöglicht der hohe Druck im Behälter über die Anbindung am Arbeitskreislauf eine schnelle Reaktionszeit der Druckregelung. Damit gelingt es, die Druckregelgeschwindigkeit für einen Gleitdruckbetrieb auf dem unteren Prozessdruck mit der Druckänderungsgeschwindigkeit auf dem oberen Prozessdruck zu synchronisieren. Der Systemgleitdruckbetrieb (unterer + oberer Prozessdruck) lässt einen maximalen Wirkungsgrad des Kreisprozesses erwarten, da die bestimmenden Arbeitsmaschinen (Verdichter, Expander) ohne größere Regeleingriffe auskommen (d.h. voll geöffnete Regelventile bzw. Leitstufen) und die bestimmenden mittleren Prozesstemperaturen im ähnlichen Verhältnis mitgleiten. Falls eine Einspeiseleitung stromauf des Expanders vorgesehen ist, besteht ein weiterer Vorteil der Lösung darin, dass die eingespeicherte Druckenergie beim Anfahren des Prozesses mitgenutzt werden kann. Die entsprechende Volumenänderungsarbeit im Expander ermöglicht das direkte (Expander treibt den Verdichter an der gemeinsamen Welle an) oder indirekte (der Generator am Expander stellt die Energie für den Motor am Verdichter bereit) "Anstoßen" des Verdichters im Arbeitskreislauf .

Ungesteuerte massenstrominduzierte Druckänderungen (z. B. wegen Gasleckagen an den Arbeitsmaschinen) werden durch eine Zusatzgaszuführung hinter dem Expander ausgeglichen. Dies hat den Vorteil, dass die Nachspeisung bei vergleichsweise niedrigem Druck erfolgt und somit der entsprechende Aufwand für einen entsprechenden separaten Verdichter, etc. begrenzt ist. Neben den bisher als Anwendungsfall angesprochenen geschlossenen Joule-Kraftwerksprozessen eignet sich das Konzept auch sehr gut, um Wärmepumpen (welche ein Gas als Arbeitsmittel ohne Phasenwechsel verwenden und neben dem üblichen Verdichter auch einen Expander aufweisen) in der Teillast zu regeln. Auch hier ist der Vorteil, dass Drosselorgane und damit zusammenhängende Verluste entfallen.

Die Erfindung wird beispielhaft anhand der Zeichnungen näher erläutert. Es zeigen schematisch und nicht maßstäblich:
Figur 1 das Grundkonzept für ein geschlossenes Gassystem mit Druckregelung gemäß der Erfindung und
Figur 2 ein geschlossenes Gassystem mit verschiedenen Weiterbildungen des Grundkonzepts der Figur 1.

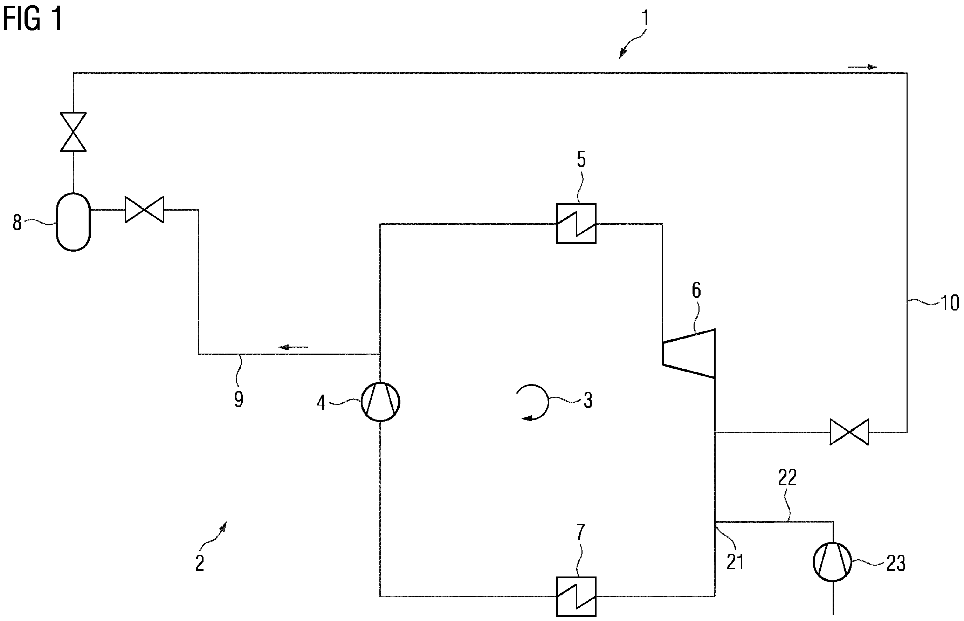

Die Figur 1 zeigt schematisch und beispielhaft eine Vorrichtung 1 umfassend ein geschlossenes Gassystem 2 mit einem Arbeitskreislauf 3, in dem ein Verdichter 4 für ein Arbeitsfluid, ein erster Wärmeübertrager 5 zur Erwärmung des Arbeitsfluids, ein Expander 6 (Gasexpansionsturbine) und ein zweiter Wärmeübertrager 7 zur Abkühlung des Arbeitsfluids angeordnet sind.

Im Ausführungsbeispiel der Figur 1 zweigt eine erste Gasleitung 9 zwischen dem Verdichter 4 und dem ersten Wärmeübertrager 5 vom Arbeitskreislauf 3 ab und mündet in den ersten Gasdruckbehälter 8. Ferner zweigt eine zweite Gasleitung 10 vom ersten Gasdruckbehälter 8 ab und mündet zwischen dem Expander 6 und dem zweiten Wärmeübertrager 7 in den Arbeitskreislauf 3.

Da Leckagen nicht ausbleiben, ist Arbeitsfluid zwischen Expander 6 und zweitem Wärmeübertrager 7 nachspeisbar. Die Nachspeisung mit Nachspeisestelle 21, Nachspeiseleitung 22 und Nachspeisepumpe 23 wird genutzt, um den normalen Gasverlust im System auszugleichen.

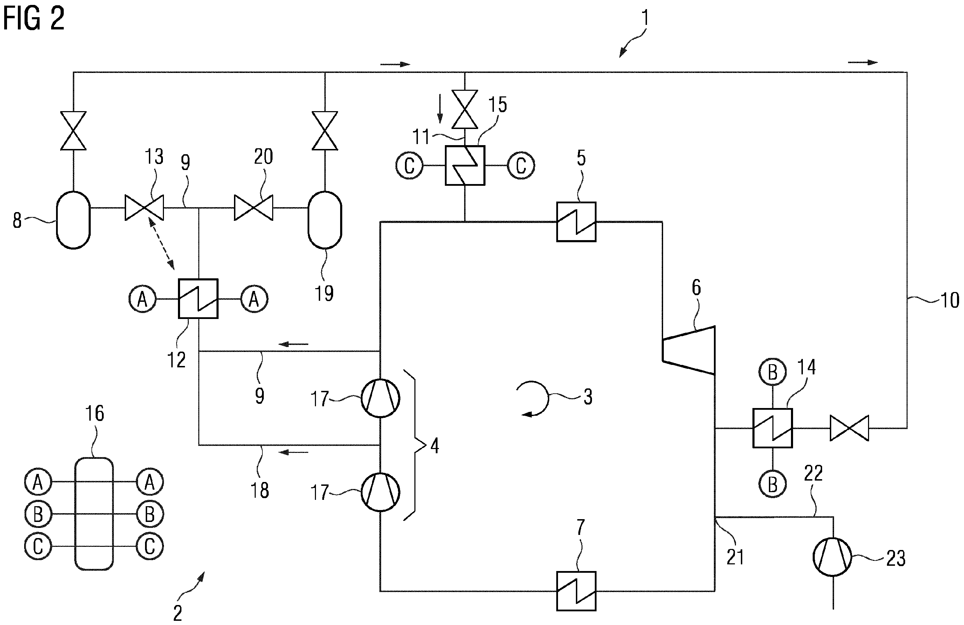

Die Figur 2 zeigt einige Erweiterungen des in Figur 1 gezeigten Grundkonzepts, die entweder einzeln oder auch in Kombination anwendbar sind. Beispielsweise zweigt eine dritte Gasleitung 11 vom ersten Gasdruckbehälter 8 oder von der zweiten Gasleitung 10 ab und mündet zwischen Verdichter 4 und erstem Wärmeübertrager 5 in den Arbeitskreislauf 3.

Ferner zeigt das Ausführungsbeispiel der Figur 2 drei weitere Wärmeübertrager. Ein dritter, in der ersten Gasleitung 9 angeordneter Wärmeübertrager 12 kühlt das gasförmige Arbeitsfluid, wohingegen ein vierter Wärmeübertrager 14 in der zweiten Gasleitung 10 und ein fünfter Wärmeübertrager 15 in der dritten Gasleitung 11 der Erwärmung des Arbeitsfluid dienen.

Bezüglich der Einspeicherung des Arbeitsfluids in den ersten Gasdruckbehälter 8 zeigt die Figur 2 ein erstes Ventil 13 in der ersten Gasleitung 9, welches in Strömungsrichtung des Arbeitsfluids nach dem dritten Wärmeübertrager 12 angeordnet ist. Dies ist die relative Anordnung der beiden Komponenten für den Fall, dass das Arbeitsfluid bei der Entspannung abkühlt. Erwärmt sich das Arbeitsfluid bei der Entspannung, wird die Anordnung von Ventil 13 und drittem Wärmeübertrager 12 vertauscht. Dies ist in der Figur 2 mit einem gestrichelten Doppelpfeil gekennzeichnet.

Zusätzlich zu dem aus Figur 1 bereits bekannten ersten Gasdruckbehälter 8 weist das Ausführungsbeispiel der Figur 2 einen zweiten Gasdruckbehälter 19 auf, der dem ersten Gasdruckbehälter 8 parallelgeschaltet ist. Auch ein entsprechendes zweites Ventil 20 ist in der Figur 2 gezeigt. Typischerweise sind die Gasdruckbehälter 8, 19 auf unterschiedlichen Druckniveaus betreibbar.

Das Vorhandensein zweier Verdichterstufen 17 am Verdichter 4 ist für das Speichern des Arbeitsfluids bei unterschiedlichen Drücken zwar nicht zwingend (man kann sich vorstellen, dass nach einem ersten Ausspeichern in den ersten Gasdruckbehälter 8 der Systemdruck gefallen ist und somit ein zweites Ausspeichern in den zweiten Gasdruckbehälter 19 bei niedrigerem Druck erfolgt), erleichtert allerdings Optimierungen. Dies wird ergänzt durch eine fünfte Gasleitung 18, die zwischen zwei Verdichterstufen 17 vom Kreislauf 3 abzweigt und in zumindest einen der Gasdruckbehälter 8, 19 mündet.

Eine sinnvolle Ergänzung des vorgestellten Konzepts ist die Installation eines thermischen Speichers 16, der über umschaltbare Verbindungsleitungen A, B, C mit dem dritten 12, vierten 14 oder fünften Wärmeübertrager 15 verbunden ist.

## Patentansprüche

1. Vorrichtung (1) umfassend ein geschlossenes Gassystem (2) mit einem Arbeitskreislauf (3), in dem ein Verdichter (4) für ein Arbeitsfluid, ein erster Wärmeübertrager (5) zur Erwärmung des Arbeitsfluids, ein Expander (6) und ein zweiter Wärmeübertrager (7) zur Abkühlung des Arbeitsfluids angeordnet sind, **gekennzeichnet durch** einen ersten Gasdruckbehälter (8) und eine erste Gasleitung (9), die zwischen dem Verdichter (4) und dem ersten Wärmeübertrager (5) vom Arbeitskreislauf (3) abzweigt und in den ersten Gasdruckbehälter (8) mündet, sowie eine zweite Gasleitung (10), die vom ersten Gasdruckbehälter (8) abzweigt und zwischen dem Expander (6) und dem zweiten Wärmeübertrager (7) in den Arbeitskreislauf (3) mündet.

2. Vorrichtung (1) nach Anspruch 1, wobei eine dritte Gasleitung (11) vom Gasdruckbehälter (8) oder von der zweiten Gasleitung (10) abzweigt und zwischen Verdichter (4) und erstem Wärmeübertrager (5) in den Arbeitskreislauf (3) mündet.

3. Vorrichtung (1) nach einem der vorherigen Ansprüche, wobei ein dritter Wärmeübertrager (12) in der ersten Gasleitung (9) angeordnet ist.

4. Vorrichtung (1) nach Anspruch 3, wobei ein erstes Ventil (13) in der ersten Gasleitung (9) in Strömungsrichtung des Arbeitsfluids nach dem dritten Wärmeübertrager (12) angeordnet ist.

5. Vorrichtung (1) nach Anspruch 3, wobei ein erstes Ventil (13) in der ersten Gasleitung (9) in Strömungsrichtung des Arbeitsfluids vor dem dritten Wärmeübertrager (12) angeordnet ist.

6. Vorrichtung (1) nach Anspruch 2, wobei ein vierter Wärmeübertrager (14) in der zweiten Gasleitung (10) und ein fünfter Wärmeübertrager (15) in der dritten Gasleitung (11) angeordnet ist.

7. Vorrichtung (1) nach den Ansprüchen 3 und 6, wobei mindestens ein thermischer Speicher (16) über umschaltbare Verbindungsleitungen (A, B, C) mit dem dritten (12), vierten (14) oder fünften Wärmeübertrager (15) verbunden ist.

8. Vorrichtung (1) nach einem der vorhergehenden Ansprüche, wobei Arbeitsfluid zwischen Expander (6) und zweitem Wärmeübertrager (7) nachspeisbar ist.

9. Vorrichtung (1) nach einem der vorhergehenden Ansprüche, wobei dem ersten Gasdruckbehälter (8) mindestens ein zweiter Gasdruckbehälter (19) parallelgeschaltet ist und die Gasdruckbehälter (8, 19) auf unterschiedlichen Druckniveaus betreibbar sind.

10. Vorrichtung (1) nach Anspruch 9, wobei der Verdichter (4) mindestens zwei Verdichterstufen (17) umfasst und eine fünfte Gasleitung (18) zwischen zwei Verdichterstufen (17) vom Kreislauf (3) abzweigt und in zumindest einen der Gasdruckbehälter (8, 19) mündet.

11. Verfahren zur Druckregelung in einem geschlossenen Gassystem (2), wobei ein Arbeitsfluid wiederholt nacheinander in einem Arbeitskreislauf (3) verdichtet, erwärmt, entspannt und abgekühlt wird, **dadurch gekennzeichnet, dass** zur Regelung eines Drucks im Gassystem (2) ein Teilstrom des Arbeitsfluids aus dem Arbeitskreislauf (3) entnommen und gespeichert wird oder eine gespeicherte Arbeitsfluidmenge wieder in den Arbeitskreislauf (3) eingebunden wird.

12. Verfahren nach Anspruch 11, wobei das Arbeitsfluid aus dem geschlossenen Gassystem (2) entnommen wird nachdem es zumindest teilweise verdichtet wurde und bevor es durch Wärmetausch erwärmt wird.

13. Verfahren nach einem der Ansprüche 11 oder 12, wobei das entnommene Arbeitsfluid gekühlt wird, bevor es eingespeichert wird.

14. Verfahren nach Anspruch 13, wobei das Arbeitsfluid bei positivem Joule-Thomson-Koeffizienten zuerst über einen Wärmetausch gekühlt und dann mittels eines Ventils (13, 20) in einen Gasdruckbehälter (8, 19) entspannt wird und bei negativem Joule-Thomson-Koeffizienten zuerst über das Ventil (13, 20) entspannt und dann über einen Wärmetausch gekühlt und danach eingespeichert wird.

15. Verfahren nach einem der Ansprüche 11 bis 14, wobei das Arbeitsfluid, bevor es in den Arbeitskreislauf (3) wieder eingebunden wird, erwärmt wird.

16. Verfahren nach einem der Ansprüche 11 bis 15, wobei ein thermischer Speicher (16) beim Abkühlen des Arbeitsfluids geladen und beim Erwärmen des Arbeitsfluids entladen wird.

17. Verfahren nach den Ansprüchen 11 bis 16, wobei bei unterschiedlichen Drücken aus dem Arbeitskreislauf (2) entnommenes Arbeitsfluid verschiedenen Gasdruckbehältern (8, 19) zugeführt wird.
